# EUROPÄISCHE PATENTSCHRIFT

(11) **EP 3 526 095 B1**
(45) Veröffentlichungstag und Bekanntmachung des Hinweises auf die Patenterteilung: **28.10.2020**
(21) Anmeldenummer: 17757476.1
(22) Anmeldetag: 04.08.2017
(51) Int. Cl.: B60W 40/04

(54) **KATEGORISIERUNG VON FAHRZEUGEN IN DER UMGEBUNG EINES KRAFTFAHRZEUGS**
CATEGORIZATION OF VEHICLES IN THE ENVIRONMENT OF A MOTOR VEHICLE
CATÉGORISATION DE VÉHICULES DANS L'ENVIRONNEMENT D'UN VÉHICULE AUTOMOBILE

(30) Priorität: 13.10.2016 DE 102016119502
(43) Veröffentlichungstag der Anmeldung: 21.08.2019
(73) Patentinhaber: Valeo Schalter und Sensoren GmbH, 74321 Bietigheim-Bissingen (DE)
(72) Erfinder: LAGRE, Axel, 74321 Bietigheim-Bissingen (DE)
(74) Vertreter: Withopf, Kristina
(86) Internationale Anmeldenummer: PCT/EP2017/069770
(87) Internationale Veröffentlichungsnummer: WO 2018/068917

(56) Entgegenhaltungen:
- EP-A1- 2 995 519
- DE-A1- 10 257 842
- DE-A1-102006 012 997
- DE-A1-102008 003 950
- DE-A1-102014 002 115

## Beschreibung

Die Erfindung betrifft ein Verfahren zum Betreiben eines Fahrerassistenzsystems eines Kraftfahrzeugs sowie ein entsprechendes Fahrerassistenzsystem mit einer Erfassungseinrichtung zum Erfassen von mehreren Fahrzeugen in einer Umgebung des Kraftfahrzeugs und mit einer Recheneinrichtung zum Ermitteln eines jeweiligen Fahrparameter-Wertes für zumindest einen Fahrparameter der erfassten Fahrzeuge.

Basierend auf einem Spurhalteassistenten und einem Abstandsregeltempomaten sowie weiteren Sensoren können Kraftfahrzeuge heute grundsätzlich autonom betrieben werden. Es gibt dabei viele verschieden Ansätze, um dies tatsächlich zu realisieren. So kann ein Kraftfahrzeug beispielsweise einem Fahrzeug folgen, welches ihm vorausfährt, oder einer Fahrspur folgen, in welcher beispielsweise das vorausfahrende Fahrzeug fährt. Es kann auch eine Geschwindigkeit des Kraftfahrzeugs in Abhängigkeit eines Navigationssystems und von Verkehrszeichen, welche durch eine Kamera erfasst werden, eingestellt werden, und vieles mehr. Dabei können beispielsweise über Kameras mit einer entsprechenden nachgeschalteten Bildverarbeitung Fahrzeuge, Fahrspuren oder Fahrspurmarkierungen, Verkehrszeichen und anderes detektiert werden.

In diesem Zusammenhang offenbart beispielsweise die US 2013 015 1058 A1 ein Verfahren, bei dem Fahrzeuge in der Umgebung des eigenen Kraftfahrzeugs erfasst werden und das Fahrverhalten dieser Fahrzeuge jeweils klassifiziert oder kategorisiert wird. Dabei werden aus dem Fahrverhalten der Fahrzeuge mögliche Gefahrensituationen abgeleitet, die sich vor dem eigenen Kraftfahrzeug außerhalb eines Erfassungsbereiches entsprechender Sensoren des eigenen Kraftfahrzeugs befinden. So kann beispielsweise das Fahrverhalten des Vorder-Fahrzeugs imitiert werden, um einer Gefahrensituation auszuweichen.

EP 2 995 519 A1 offenbart ein System zum Steuern eines autonomen Fahrzeugs mit Kameras zum Erhalten von Bilddaten der benachbarten Fahrzeuge in einer Nähe des autonomen Fahrzeugs und zum Identifizieren von physikalischen Eigenschaften der benachbarten Fahrzeuge, einschließlich Fabrikaten, Modellen, und Karosserien der benachbarten Fahrzeuge, Farben der benachbarten Fahrzeuge und exponierte Fracht, die von den benachbarten Fahrzeugen transportiert wird. Das System bildet die identifizierten physikalischen Eigenschaften in vorhergesagte potentielle Straßenereignisse in der Nähe des autonomen Fahrzeugs ab, und trifft Fahrentscheidungen basierend auf dem vorhergesagten potentiellen Straßenereignis.

Es ist Aufgabe der vorliegenden Erfindung, ein Fahrverhalten eines Kraftfahrzeugs besser an eine Verkehrssituation anzupassen oder dies zumindest zu ermöglichen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Betreiben eines Fahrerassistenzsystems eines Kraftfahrzeugs, mit einer Reihe von Verfahrensschritten. Ein Verfahrensschritt ist dabei ein Erfassen von mehreren Fahrzeugen in einer Umgebung des Kraftfahrzeugs durch eine Erfassungseinrichtung des Fahrerassistenzsystems. Dies kann beispielsweise mit einer Kamera oder anderen Sensoren erfolgen. Grundsätzlich kommt das Verfahren somit in Situationen zum Einsatz, in denen mehrere oder sogar viele Fahrzeuge in der Umgebung vorhanden sind. Vorteilhafterweise kommt das Verfahren so beispielsweise bei einem Verkehrsstau, auf einer Autobahn oder einem Highway, oder im Stadtverkehr zum Einsatz. Ein weiterer Verfahrensschritt ist ein Ermitteln oder Bestimmen zumindest eines jeweiligen Fahrparameter-Wertes für zumindest einen Fahrparameter der erfassten Fahrzeuge durch eine Recheneinrichtung des Fahrerassistenzsystems. So kann beispielsweise für die erfassten Fahrzeuge, bevorzugt alle erfassten Fahrzeuge, ausgehend von von der Erfassungseinrichtung bereitgestellten Daten ein jeweiliger Geschwindigkeitswert als Fahrparameter-Wert für die Geschwindigkeit als Fahrparameter ermittelt oder berechnet werden.

Ein weiterer Verfahrensschritt ist hier ein Kategorisieren, welches auch als Klassifizieren bezeichnet werden kann, der erfassten Fahrzeuge durch die Recheneinrichtung anhand des zumindest einen jeweils für die erfassten Fahrzeuge ermittelten Fahrparameter-Wertes in Durchschnitts-Fahrzeuge (Inliers) und in Abweichler-Fahrzeuge (Outliers). So können beispielsweise die Fahrzeuge, deren Geschwindigkeiten außerhalb eines vorgegebenen Geschwindigkeitsintervalls liegen, als Abweichler-Fahrzeuge klassifiziert oder kategorisiert werden, und die Fahrzeuge, deren Geschwindigkeit innerhalb des vorgegebenen Geschwindigkeitsintervalls liegt, als Durchschnitts-Fahrzeuge.

Als nächste Verfahrensschritte folgen hier ein kollektives Vorhersagen eines Gesamtverhaltens, welches auch als Gesamtverkehrsverhaltens bezeichnet ist, für eine Gesamtheit der erfassten Durchschnitts-Fahrzeuge anhand der für die Durchschnitts-Fahrzeuge ermittelten Fahrparameter-Werte durch die Recheneinrichtung. Das kollektive Vorhersagen kann also durch die Recheneinrichtung anhand der Gesamtheit der für die Durchschnitts-Fahrzeuge ermittelten Fahrparameter-Werte erfolgen. Insbesondere wird in der Gesamtheit der erfassten Durchschnitts-Fahrzeuge beziehungsweise der Gesamtheit der für die Durchschnitts-Fahrzeuge ermittelten Fahrparameter-Werte wird nicht mehr zwischen den einzelnen Durchschnitts-Fahrzeugen unterschieden. So kann beispielsweise für die Gesamtheit der erfassten Durchschnitts-Fahrzeuge, also alle Durchschnitts-Fahrzeuge, eine Geschwindigkeit durch eine Durchschnittsgeschwindigkeit oder durch eine Geschwindigkeitsverteilung mit Mittelwert und Standardabweichung kollektiv vorhergesagt werden. Ergänzend erfolgt dabei durch die Recheneinrichtung ein individuelles Vorhersagen eines jeweiligen Einzelverhaltens für die erfassten Abweichler-Fahrzeuge anhand des jeweiligen, für das jeweilige Abweichler-Fahrzeug ermittelten Fahrparameter-Wertes. So kann für jeweilige Abweichler beispielsweise anhand einer reihe von individuell in der Vergangenheit ermittelten Geschwindigkeitswerte die Geschwindigkeit und damit das Einzelverhalten des Fahrzeugs individuell vorhergesagt werden. In Abhängigkeit des Ergebnisses des Kategorisierens kann das individuelle Vorhersagen dabei auch für ein einziges Abweichler-Fahrzeug oder kein Abweichler-Fahrzeug erfolgen und dann entsprechend in der gegebenen Verkehrssituation entfallen. Hier beschrieben ist die grundsätzliche Funktionsweise des Verfahrens, weshalb hier und im Folgenden allgemein von mehreren Abweichler-Fahrzeugen geschrieben wird. In einer konkreten Realisierung des Verfahrens kann dabei in einer gegebenen Verkehrssituation nur ein einziges oder gar kein Abweichler-Fahrzeug zu verstehen sein.

Im Anschluss kann beispielsweise als weiterer Verfahrensschritt ein Steuern des Kraftfahrzeugs in Abhängigkeit des für die Durchschnitts-Fahrzeuge und für die Abweichler-Fahrzeuge vorhergesagten Verhaltens durch das Fahrerassistenzsystem erfolgen. Dabei kann insbesondere ein Fahrparameter-Wert eines Fahrparameters des eigenen Kraftfahrzeugs, beispielsweise eine Geschwindigkeit und/oder eine Beschleunigung und/oder eine Gierrate, in Abhängigkeit des Gesamtverhaltens der Durchschnitts-Fahrzeuge vorgeben werden. Beispielsweise kann so der Fahrparameter-Wert, beispielsweise die Geschwindigkeit und/oder die Beschleunigung des Kraftfahrzeugs und/oder die Gierrate, an einen entsprechenden Fahrparameter-Wert der Durchschnitts-Fahrzeuge angepasst werden, beispielsweise eine Geschwindigkeit oder durchschnittliche Geschwindigkeit und/oder eine Beschleunigung oder durchschnittliche Beschleunigung und/oder an eine Gierrate oder durchschnittliche Gierrate. Bevorzugt erfolgt dabei die Anpassung eines weiteren Fahrparameters des eigenen Kraftfahrzeugs, beispielsweise eines Abstandes zu anderen Fahrzeugen oder einer Bremsbereitschaft in Abhängigkeit des für die Abweichler-Fahrzeuge vorhergesagten Einzelverhaltens. Alternativ oder ergänzend zu dem Steuern des Kraftfahrzeugs kann in Abhängigkeit des vorhergesagten Verhaltens auch eine entsprechende Warnung an einen Fahrer des Kraftfahrzeugs ausgegeben werden. Das Steuern oder Ausgeben der Warnung kann insbesondere auch in Abhängigkeit eine Verkehrsdichte erfolgen, die dann anhand der erfassten Fahrzeuge ermittelt wird.

Grundsätzlich werden hier also die Fahrzeuge in der Umgebung klassifiziert oder kategorisiert, um einen besseren Überblick über die Verkehrssituation zu erhalten und ein sichereres und flüssigeres Fahren zu ermöglichen. Hierbei wird zwischen dem allgemeinen Verhalten des Verkehrs einerseits und Fahrzeugen mit einem abweichendem oder auffälligen Verhalten unterschieden, welche ein besonderes Gefahrpotenzial darstellen. Dazu können beispielsweise Fahrzeuge zählen, die andere Fahrzeuge überholen und/oder deutlich schneller fahren als andere Fahrzeuge und/oder welche eine Spur wechseln. Dadurch, dass für die ungefährlichen Durchschnitts-Fahrzeuge, welche das Gesamtverhalten maßgeblich bestimmen und deren Verhalten umgekehrt durch das Gesamtverhalten gut beschrieben wird, kollektiv als Gesamtheit beschrieben werden, ist es nicht erforderlich, für jedes der Durchschnitts-Fahrzeuge einzeln Vorhersagen zu treffen, ohne dabei allerdings ein Sicherheitsrisiko einzugehen. Für die auffälligen Abweichler-Fahrzeuge, deren Verhalten im Verkehr von dem Gesamtverhalten der Durchschnitts-Fahrzeuge erheblich abweicht, gilt dies nicht, weshalb für diese individuell das jeweilige Einzelverhalten, welches auch als Einzel-Verkehrsverhalten bezeichnet ist, vorhergesagt wird. Dadurch ist das beschriebene Verfahren gerade in Situationen, in welchen eine hohe Verkehrsdichte vorliegt und es aufgrund begrenzter Rechenkapazitäten im eigenen Kraftfahrzeug nicht möglich ist, das Verhalten aller Fahrzeuge im Detail vorherzusagen, vorteilhaft.

In einer vorteilhaften Ausführungsform ist es dabei vorgesehen, dass als weiterer Verfahrensschritt ein Steuern des Kraftfahrzeugs in Abhängigkeit des für die Durchschnitts-Fahrzeuge und die Abweichler-Fahrzeuge vorhergesagten Verhaltens durch das Fahrerassistenzsystem in einem teilautonomen oder vollautonomen Fahrmodus des Kraftfahrzeugs erfolgt.

Gerade für einen teilautonomen oder vollautonomen Fahrmodus ist das genannte Verfahren hier besonders geeignet, da sich von dem Gesamtverhalten der Durchschnitts-Fahrzeuge besonders gut ein allgemeines eigenes (Fahr-)Verhalten ableiten lässt, welches ein an die anderen Fahrzeuge angepasstes flüssiges und sicheres Fahren ermöglicht. Dadurch, dass die Abweichler-Fahrzeuge jeweils einzeln verfolgt und analysiert werden, können bei geringer Rechenkapazität auch gefährliche Situationen sehr zuverlässig vorhergesagt und entsprechend vermieden werden. Dafür kann das jeweilige Einzelverhalten der Abweichler-Fahrzeuge auch weiteren, bereits etablierten Analyseschritten unterzogen werden, die hier nicht ausgeführt werden sollen. Das vorgeschlagene Verfahren lässt sich somit gut mit bestehenden Vorgehensweisen kombinieren.

In einer weiteren Ausführungsform ist vorgesehen, dass der zumindest eine Fahrparameter eine Gierrate und/oder eine Geschwindigkeit und/oder Beschleunigung und/oder eine Spurwechselhäufigkeit oder -frequenz und/oder eine Überholhäufigkeit oder -frequenz und/oder einen weiteren Fahrparameter des jeweiligen erfassten Fahrzeugs umfasst.

Das hat den Vorteil, dass die genannten Fahrparameter ein Verhalten eines Verkehrs besonders gut charakterisieren. So lassen sich die erfassten Fahrzeuge besonders sinnvoll charakterisieren, wodurch entsprechend ein besonders sicheres Fahren des Kraftfahrzeugs im Kraftverkehr realisiert werden kann.

In einer weiteren vorteilhaften Ausführungsform ist dabei vorgesehen, dass das Kategorisieren und/oder das kollektive Vorhersagen ein Bilden einer Verteilung und/oder eines Mittelwerts und/oder einer Varianz der jeweiligen Fahrparameter-Werte des zumindest einen Fahrparameters umfasst. Insbesondere kann hier bei dem kollektiven Vorhersagen vorgesehen sein, eine Verteilung und/oder einen Mittelwert und/oder eine Varianz der Fahrparameter-Werte der Durchschnitts-Fahrzeuge zu bilden, bevorzugt nur der Durchschnitts-Fahrzeuge zu bilden.

Das hat den Vorteil, dass sich so bei dem Kategorisieren besonders leicht Ausreißer und entsprechend Abweichler-Fahrzeuge identifizieren lassen. Bei dem kollektiven Vorhersagen kann so auf einfache Weise ein, insbesondere gegenwärtiges, Gesamtverhalten der Fahrzeuge, gerade der Durchschnitts-Fahrzeuge, quantifiziert werden. Somit kann auf leichte Weise ein Überblick über den Verkehr erreicht werden.

In einer weiteren vorteilhaften Ausführungsform ist vorgesehen, dass das Kategorisieren unter Verwendung einer Methode, die auch als Algorithmus bezeichnet werden kann, der Statistik zum Erkennen von Fehlern und/oder Abweichungen in einer Menge von Datenpunkten erfolgt. Insbesondere kann das Kategorisieren unter der Verwendung des sogenannten RANSAC-Algorithmus oder Random Sample Consensus Algorithmus, welcher sich mit "Übereinstimmung mit einer zufälligen Stichprobe" - Algorithmus übersetzen lässt, und/oder eines Maximum Likelihood-artigen Schätzers, eines sogenannten M-Schätzers, und/oder einer Stützvektormaschine, einer sogenannten Support Vector Machine (SVM) erfolgen. Bei einem Verwenden einer Stützvektormaschine kann dabei eine elliptische Hüllkurve vorgesehen sein. Hierbei können die Fehler und/oder Abweichungen der Statistik den Abweichler-Fahrzeugen in der gesamten Menge der erfassten Fahrzeuge entsprechen.

Das hat den Vorteil, dass die Abweichler-Fahrzeuge und somit auch die Durchschnitts-Fahrzeuge besonders schnell und zuverlässig bestimmt werden können. Dies kann vorliegend auch in Echtzeit und mit einem besonders geringen Rechenaufwand realisiert werden.

In einer besonders vorteilhaften Ausführungsform ist vorgesehen, dass das Erfassen, Ermitteln und Kategorisieren, insbesondere auch das kollektive Vorhersagen und das individuelle Vorhersagen sowie gegebenenfalls auch das Steuern, iterativ und/oder fortlaufend durchgeführt wird und dabei die erfassten Fahrzeuge, beispielsweise in Form einer logischen Repräsentation der erfassten Fahrzeuge mit den zugehörigen ermittelten Fahrparameter-Werten, in einem Zwischenspeicher der Recheneinrichtung zwischengespeichert werden. Insbesondere können die erfassten Fahrzeuge mit den zugehörigen ermittelten Fahrparameter-Werten dabei mit einem Zeitstempel versehen werden. Es können dabei auch schon die bloßen Fahrparameter-Werte, welche beispielsweise in Form einer Tabelle zwischengespeichert werden, als eine logische Repräsentation der erfassten Fahrzeuge angesehen werden. Des Weiteren wird das Kategorisieren, das kollektive Vorhersagen sowie das individuelle Vorhersagen und insbesondere auch gegebenenfalls das Steuern basierend auf den, insbesondere allen, zwischengespeicherten erfassten Fahrzeugen mit den zwischengespeicherten ermittelten Fahrparameter-Werten durchgeführt. Dabei können beispielsweise Fahrzeuge mit den zugehörigen ermittelten Fahrparameter-Werten oder Fahrparameterwerde aus dem Zwischenspeicher gelöscht und nicht mehr für das Kategorisieren und Vorhersagen des Gesamtverhaltens und des Einstellverhaltens genutzt werden. Beispielsweise kann das Löschen für Fahrparameter-Werte automatisch nach einer vorgegebenen Zeit erfolgen, also für Fahrparameter-Werte, welche ein vorgegebenes Höchstalter erreicht haben.

Das hat den Vorteil, dass nicht nur die zu einem gegebenen Zeitpunkt erfassten Fahrzeuge berücksichtigt werden, sondern die über einen Zeitraum erfassten Fahrzeuge berücksichtigt werden. Daher wird die Statistik erheblich verbessert, sodass die Qualität des Vorhersagens erhöht werden kann. Über ein automatisches Löschen der ermittelten Fahrparameter-Werte nach einer vorgegebenen Zeit kann dabei die Aktualität der Voraussage sichergestellt werden.

In einer vorteilhaften Ausführungsform ist es dabei vorgesehen, dass ein Anteil der Durchschnitts-Fahrzeuge an den zwischengespeicherten erfassten Fahrzeugen ermittelt und überprüft wird und, falls der Anteil geringer ist als ein vorgegebener Grenzwert, insbesondere geringer als 50 Prozent oder geringer als 70 Prozent, einerseits zumindest das eine Durchschnittsfahrzeug mit dem ältesten Zeitstempel sowie der zumindest eine zugehörige Fahrparameter-Wert aus dem Zwischenspeicher gelöscht wird und sodann andererseits das Kategorisieren erneut durchgeführt wird. Insbesondere kann eine vorgegebene Anzahl von mehr als einem Durchschnittsfahrzeug mit den ältesten Zeitstempeln gelöscht werden. Insbesondere kann auch das Ermitteln und Überprüfen des Anteils der Durchschnitts-Fahrzeuge an den erfassten Fahrzeugen erneut durchgeführt werden.

Damit kann sichergestellt werden, dass obsolete Daten von in einer qualitativ anderen Verkehrssituation erfassten Fahrzeugen nicht das Verfahren beeinträchtigen. Über die Wahl des vorgegebenen Grenzwertes lässt sich hier eine Mindestqualität des Verfahrens bei maximaler statistischer Validität, also größtmöglicher Anzahl erfasster Fahrzeuge, realisieren. Sinkt der Anteil der Durchschnitts-Fahrzeuge unter den vorgegebenen Grenzwert, so sind die Durchschnitts-Fahrzeuge nicht länger repräsentativ für den Gesamtverkehr, es gibt entsprechend zu viele Abweichler-Fahrzeuge, was ein Hinweis darauf ist, dass eine Annahme über die Durchschnitts-Fahrzeuge bei dem Kategorisieren, beispielsweise eine Hypothese der Stützvektormaschine, angepasst werden sollte.

In einer weiteren bevorzugten Ausführungsform ist hier vorgesehen, dass Abweichler-Fahrzeuge mit den zugehörigen ermittelten Fahrparameter-Werten, welche in einer aktuellen Iterationsstufe nicht mehr erfasst werden, aus dem Zwischenspeicher gelöscht werden. Für erfassten Fahrzeuge werden dabei in der Vergangenheit ermittelte Fahrparameter-Werte nicht gelöscht und somit weiter im Zwischenspeicher vorgehalten. Es werden somit insbesondere nur Abweichler-Fahrzeuge mit einem Zeitstempel nicht gelöscht und damit bei dem Kategorisieren und dem individuellen Vorhersagen berücksichtigt, welche einen Zeitstempel aufweisen, der der aktuellen Iterationsstufe entspricht. Damit werden nur Abweichler-Fahrzeuge beziehungsweise deren Fahrparameter-Werte berücksichtigt, die im letzten Zeitschritt oder der letzten Iterationsstufe erfasst wurden.

Damit werden Abweichler-Fahrzeuge, welche nicht mehr im Erfassungsbereich des Kraftfahrzeugs sind und somit keine direkte potentielle Gefahr mehr darstellen, nicht mehr berücksichtigt. Entsprechend verfälschen diese nicht ein Ergebnis des Kategorisierens und binden auch keine Ressourcen der Recheneinrichtung mehr.

In einer weiteren vorteilhaften Ausführungsform ist vorgesehen, dass das kollektive Vorhersagen und/oder das individuelle Vorhersagen unter Verwendung eines Vorhersagefilters erfolgt. Insbesondere kann das Vorhersagen unter Verwendung eines Kalman-Filters und/oder eines Alpha-Beta-Filters erfolgen. Der Alpha-Beta-Filter ist dabei auch als F-G-Filter oder G-H-Filter bekannt.

Die genannten Filter haben den Vorteil, dass sich mit ihnen ein künftiges Gesamtverhalten der Gesamtheit der Durchschnittsfahrzeuge, also ein Gesamtverhalten des allgemeinen Verkehrs, und/oder ein künftiges Einzelverhalten eines Abweichler-Fahrzeug besonders gut vorhersehen lässt. Damit kann auch das eigene Fahrverhalten besonders gut an den allgemeinen Verkehr beziehungsweise an die Abweichler-Fahrzeuge als potentielle Fahrquellen angepasst werden.

In einer besonders vorteilhaften Ausführungsform ist vorgesehen, dass das Einzelverhalten des zumindest einen erfassten Nachbar-Fahrzeugs mit dem geringsten Abstand zu dem eigenen Kraftfahrzeug unabhängig von der Kategorisierung des Fahrzeugs mit dem geringsten Abstand als Durchschnitts- oder Abweichler-Fahrzeug anhand des für das Nachbar-Fahrzeug ermittelten Fahrparameter-Werts individuell vorhergesagt wird. Entsprechend können hier die erfassten Fahrzeuge in drei Klassen kategorisiert oder klassifiziert werden, nämlich zusätzlich zu den Durchschnitts-Fahrzeugen und den Abweichler-Fahrzeugen noch in die Nachbar-Fahrzeuge. Gerade die Nachbar-Fahrzeuge mit dem geringsten Abstand zu dem eigenen Kraftfahrzeug sind besonders große potentielle Gefahrenquellen.

Das hat den Vorteil, dass das Fahrzeug mit dem geringsten Abstand zu dem Kraftfahrzeug, das oder die Nachbar-Fahrzeuge, ebenfalls in seinem Einzelverhalten individuell vorhergesagt wird, sodass ein Unfall mit diesem besonders gut verhindert werden kann.

In einer besonders vorteilhaften Ausführungsform ist dabei vorgesehen, dass ein Fahrparameter des Kraftfahrzeugs, insbesondere eine Gierrate oder eine Geschwindigkeit und/oder eine Beschleunigung und/oder ein Abstand zu einem der erfassten Fahrzeuge und/oder einem Objekt in der Umgebung des Kraftfahrzeugs, anteilig an das vorhergesagte Gesamtverhalten und an das für das erfasste Nachbar-Fahrzeug mit dem geringsten Abstand vorhergesagte Einzelverhalten angepasst wird. Dies kann beispielsweise über eine Gewichtung erfolgen. So kann beispielsweise eine Geschwindigkeit des eigenen Kraftfahrzeugs zu 70 Prozent anhand einer Geschwindigkeit des Vorder-Fahrzeugs und zu 30 Prozent anhand einer Geschwindigkeit der Durchschnitts-Fahrzeuge, beispielsweise einer Durchschnittsgeschwindigkeit der Durchschnitts-Fahrzeuge, bestimmt werden.

Das hat den Vorteil, dass sich das Fahrzeug oder der Fahrer des Kraftfahrzeugs einerseits an einem allgemeinen Verhalten der anderen Verkehrsteilnehmer, beispielsweise an einem Verkehrsfluss, orientieren kann und zugleich das Vorder-Fahrzeug in einem seinem Gefahrpotenzial entsprechenden Maße berücksichtigt wird, um ein sicheres und flüssiges Fahren zu realisieren.

In einer weiteren vorteilhaften Ausführungsform ist vorgesehen, dass bei dem kollektiven Vorhersagen das Gesamtverhalten anhand eines GesamtFahrparameter-Wertes für den jeweiligen zumindest einen Fahrparameter charakterisiert wird, welcher aus den ermittelten Fahrparameter-Werten erzeugt oder gebildet wird. Insbesondere kann das Gesamtverhalten dabei anhand jeweils nur eines oder jeweils nur zweier GesamtFahrparameter-Werte für den jeweiligen zumindest einen Fahrparameter charakterisiert werden. So kann beispielsweise das Gesamtverhalten anhand eines Geschwindigkeitsmittelwertes und einer Geschwindigkeitsabweichung als jeweilige Fahrparameter-Werte für die Geschwindigkeit als einen Fahrparameter charakterisiert werden.

Das hat den Vorteil, dass das Gesamtverhalten des Verkehrs auf besonders einfache Weise charakterisiert wird, und dennoch eine hohe Qualität der Vorhersage erreicht wird.

In einer besonders vorteilhaften Ausführungsform ist dabei vorgesehen, dass die erfassten Abweichler-Fahrzeuge nach oder gemäß einem vorgegebenen Kriterium, welches insbesondere einen Abstand zu dem eigenen Kraftfahrzeug und/oder einen oder mehrere der Fahrparameter, insbesondere eine Gierrate und/oder eine Geschwindigkeit und/oder eine Beschleunigung und/oder eine Spurwechselhäufigkeit und/oder eine Überholhäufigkeit, umfasst, im Hinblick auf ihr Gefahrpotenzial bewertet und priorisiert werden, und nur für eine vorgegebene oder vorgebbare Anzahl der am höchsten priorisierten erfassten Abweichler-Fahrzeuge das Einzelverhalten individuell vorhergesagt wird, sodass die Abweichler-Fahrzeuge mit dem höchsten Gefahrpotenzial überwacht werden.

Das hat den Vorteil, dass die erforderliche Rechenkapazität weiter verringert wird und dabei die gefährlichsten Abweichler-Fahrzeuge in der Umgebung des Kraftfahrzeugs weiterhin genau erfasst und deren Einzelverhalten vorhergesagt wird.

Der Grundgedanke der Erfindung kann somit darin gesehen werden, Fahrzeuge in der Umgebung des Kraftfahrzeugs zu klassifizieren, um einen Überblick über die aktuelle Verkehrssituation zu erhalten und damit ein sicheres und möglichst gleichmäßiges Fahren, beispielsweise autonomes Fahren, zu ermöglichen. Die Fahrzeuge in der Umgebung können dabei in drei Gruppen unterteilt werden, nämlich in Durchschnitts-Fahrzeuge (Inliers), Abweichler-Fahrzeuge (Outliers) und Nachbar-Fahrzeuge (Closest Cars), und zwar basierend auf jeweiligen Eigenschaften oder Fahrparametern der entsprechenden Fahrzeuge, wie beispielsweise Geschwindigkeit, Beschleunigung, Gierrate oder einem Abstand zum eigenen Kraftfahrzeug.

Die Durchschnitts-Fahrzeuge repräsentieren dabei das allgemeine Verkehrsverhalten. Mit einem Filter können dabei die nächsten Schritte des allgemeinen Verkehrsverhaltens, des Gesamtverhaltens, vorhergesagt werden. Die Abweichler-Fahrzeuge repräsentieren die Ausreißer aus der Gruppe der Durchschnitts-Fahrzeuge. Diese können beispielsweise durch eine höhere Geschwindigkeit oder häufige Spurwechsel auffallen und werden als potentielle Gefahr eingestuft. Daher wird jedes als Abweichler-Fahrzeug eingestufte Fahrzeug individuell überwacht, das heißt ein jeweiliges Einzelverhalten individuell vorhergesagt. Bei vielen Fahrzeugen, die als Abweichler-Fahrzeuge eingestuft werden, kann dabei eine Priorisierung vorgenommen werden. Für jedes der überwachten Abweichler-Fahrzeuge wird dessen Einzelverhalten mit einem Filter individuell vorhergesagt oder prädiziert. Die Nachbar-Fahrzeuge repräsentieren die Fahrzeuge, die sich in der nahen Umgebung des Kraftfahrzeugs befinden. Hier geht es insbesondere darum, Unfälle mit den Nachbar-Fahrzeugen zu vermeiden. Auch hier kann das Einzelverhalten der Nachbar-Fahrzeuge individuell mit einem eigenen Filter vorhergesagt oder prädiziert werden.

Insgesamt kann so durch das vorgeschlagene Verfahren einerseits der allgemeine Verkehrsfluss analysiert und prädiziert werden, und ein eigenes Verhalten des Kraftfahrzeugs an dieses angepasst werden und andererseits potentielle Gefahren in Form der Abweichler-Fahrzeuge oder auch durch Nachbar-Fahrzeuge rechtzeitig erkannt und vorhergesagt werden, sodass ein sicheres und konstantes Fahren, beispielsweise ein sicheres und konstantes autonomes Fahren, ermöglicht wird.

Die Erfindung betrifft auch ein Fahrerassistenzsystem für ein Kraftfahrzeug, mit einer Erfassungseinrichtung zum Erfassen von mehreren Fahrzeugen in einer Umgebung des Kraftfahrzeugs und mit einer Recheneinrichtung zum Ermitteln eines jeweiligen Fahrparameter-Wertes für zumindest einen Fahrparameter der erfassten Fahrzeuge. Wichtig ist dabei, dass die Recheneinrichtung ausgebildet ist, die erfassten Fahrzeuge anhand des zumindest einen jeweils für die erfassten Fahrzeuge ermittelten Fahrparameter-Wertes in Durchschnitts-Fahrzeuge und in Abweichler-Fahrzeuge zu kategorisieren, sowie ein Gesamtverhalten für eine Gesamtheit der erfassten Durchschnitts-Fahrzeuge anhand der für die Durchschnitts-Fahrzeuge ermittelten Fahrparameter-Werte kollektiv vorherzusagen und ein jeweiliges Einzelverhalten für die erfassten Abweichler-Fahrzeuge anhand des jeweiligen, für das jeweilige Abweichlerfahrzeug ermittelten Fahrparameter-Wertes individuell vorherzusagen.

Die Erfindung betrifft auch eine Kopf-oben-Anzeige, die zum Durchführen eines erfindungsgemäßen Verfahrens oder einer vorteilhaften Ausführungsform des erfindungsgemäßen Verfahrens ausgebildet ist.

Vorteile und vorteilhafte Ausführungsformen des Fahrerassistenzsystems entsprechen hier Vorteilen und vorteilhaften Ausführungsformen des Verfahrens zum Betreiben eines Fahrerassistenzsystems.

Die Erfindung betrifft auch ein Kraftfahrzeug mit einem solchen Fahrerassistenzsystem.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

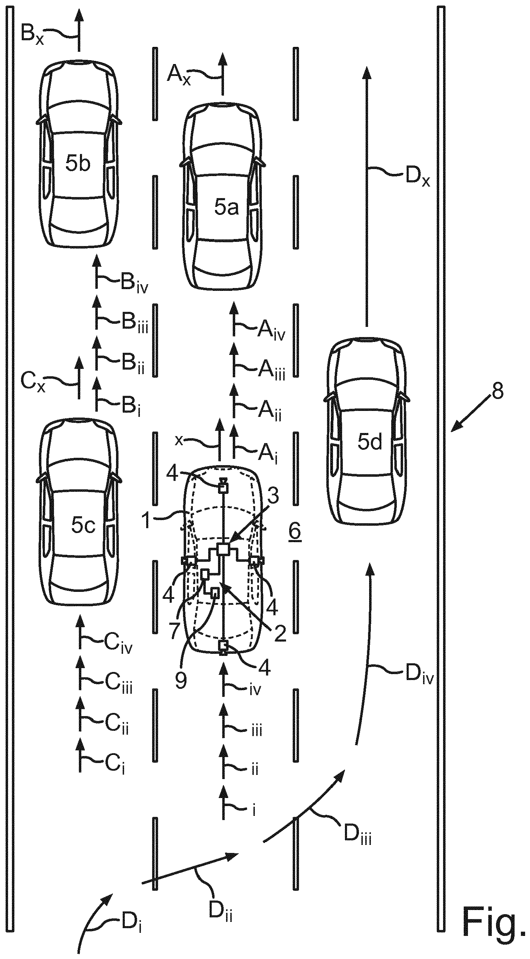

Ausführungsbeispiele der Erfindung werden nachfolgend anhand einer schematischen Zeichnung näher erläutert. Die einzige Fig. zeigt dabei ein Kraftfahrzeug mit einer beispielhaften Ausführungsform eines Fahrerassistenzsystems in einem Beispielsszenario, anhand dessen ein beispielhaftes Verfahren zum Betreiben des Fahrerassistenzsystems erläutert wird.

In der einzigen Fig. ist ein beispielhaftes Szenario aus einer Vogelperspektive dargestellt. Ein Kraftfahrzeug 1 ist dabei mit einem Fahrerassistenzsystem 2 ausgestattet, welches eine Erfassungseinrichtung 3 umfasst, welche hier als optische Erfassungseinrichtung mit einer Mehrzahl von Kameras 4 ausgeführt ist, und dem Erfassen von Fahrzeugen in einer Umgebung 5 des Kraftfahrzeugs 1 dient, sowie mit einer Recheneinrichtung 7 zum Ermitteln eines jeweiligen Fahrparameter-Wertes für zumindest einen Fahrparameter der erfassten Fahrzeuge 5a bis 5d ausgestattet ist.

Die Recheneinrichtung 7 ist dabei ausgebildet, die erfassten Fahrzeuge 5a bis 5d anhand des zumindest einen jeweils für die erfassten Fahrzeuge 5a bis 5d ermittelten Fahrparameter-Wertes, beispielsweise eines Geschwindigkeitswertes und einer Spurwechselhäufigkeit, in Durchschnitts-Fahrzeuge 5a bis 5c und Abweichler-Fahrzeuge 5d zu kategorisieren. Die Recheneinrichtung 7 ist ebenfalls ausgebildet, ein Gesamtverhalten für eine Gesamtheit der erfassten Durchschnitts-Fahrzeuge 5a bis 5c, beispielsweise eine durchschnittliche Geschwindigkeit sowie hier eine entsprechende Standardabweichung für die Durchschnittsgeschwindigkeit anhand der für die Durchschnitts-Fahrzeuge 5a bis 5c ermittelten Fahrparameter-Werte, beispielsweise die Einzel-Geschwindigkeitswerte, kollektiv vorherzusagen und ein jeweiliges Einzelverhalten für die erfassten Abweichler-Fahrzeuge 5d, bei welchen es sich in dem gezeigten Beispiel um ein einziges Fahrzeug handelt, anhand des jeweiligen, für das jeweilige Abweichler-Fahrzeug 5d ermittelten Fahrparameter-Wertes individuell vorherzusagen. Im gezeigten Beispiel wird damit kollektiv für die Fahrzeuge 5a bis 5c aus der jeweils ermittelten Einzelgeschwindigkeit der Fahrzeuge 5a bis 5c eine Durchschnittsgeschwindigkeit mit einer entsprechenden Standardabweichung bestimmt, anhand derer die Geschwindigkeit der Durchschnitts-Fahrzeuge 5a bis 5c und in Abhängigkeit der Durchschnittsgeschwindigkeit das allgemeine Verhalten des Verkehrs vorhergesagt. Ausgehend von dieser Vorhersage kann beispielsweise eine Geschwindigkeit für das Kraftfahrzeug 1 durch das Fahrerassistenzsystem 2 vorgegeben werden oder eine entsprechende Empfehlung an den Fahrer des Kraftfahrzeugs 1 ausgegeben werden. Es kann beispielsweise auch ein Mindestabstand, der von dem Kraftfahrzeug 1 zu den anderen Fahrzeugen 5a - 5d eingehalten werden soll, vorgegeben werden.

Für das Abweichler-Fahrzeug 5d erfolgt nun keine Mittelung oder dergleichen, vielmehr wird jedes Abweichler-Fahrzeug 5d in seinem Einzelverhalten separat erfasst und aus diesem Einzelverhalten individuell ein jeweiliges Einzelverhalten des entsprechenden Abweichler-Fahrzeugs, hier des einen Abweichler-Fahrzeugs 5d, vorhergesagt. Das entsprechende Vorhersageergebnis kann dazu genutzt werden, eine Gefahrensituation zu vermeiden, beispielsweise einen Abstand zu dem Abweichler-Fahrzeugs 5d zu vergrößern oder eine Fahrgeschwindigkeit zu verringern, oder eine Warnung an den Fahrer des Kraftfahrzeugs 1 auszugeben.

Dieses Verfahren soll nun im Folgenden nochmals anhand des gezeigten Beispiels detailliert erläutert werden. Vorliegend bewegt sich das Kraftfahrzeug 1 auf der mittleren Spur einer dreispurigen Straße mit gleichmäßiger Geschwindigkeit fort. Ein erstes Fahrzeug 5a bewegt sich ebenfalls mit gleichmäßiger Geschwindigkeit auf der mittleren Spur vor dem Kraftfahrzeug 1 fort. Zwei weitere Fahrzeuge, das zweite und das dritte Fahrzeug 5b und 5c, bewegen sich ebenfalls mit gleichmäßiger Geschwindigkeit, allerdings auf der linken Spur neben und schräg vor dem Kraftfahrzeug 1 fort. Ein viertes Fahrzeug 5d bewegt sich vorliegend mit großer Geschwindigkeit auf der rechten Spur schräg vor dem Kraftfahrzeug 1. Das Fahrverhalten sowie der Fahrweg in der Vergangenheit ist für das Kraftfahrzeug 1 und die Fahrzeuge 5a bis 5d durch jeweilige Pfeile i bis iv, Ai bis Aiv, Bi bis Biv, Ci bis Civ sowie Di bis Div dargestellt. Der Pfeil Ai symbolisiert somit Position und Verhalten des ersten Fahrzeugs 5a zum Zeitpunkt i, der Pfeil Bi Position und Verhalten des zweiten Fahrzeugs 5b zum Zeitpunkt i und so weiter, wobei Position und Verhalten des Kraftfahrzeugs 1 zu den Zeitpunkten i bis iv durch die Pfeile i bis iv symbolisiert ist. Ein längerer Pfeil steht dabei für eine größere Geschwindigkeit. Für sämtliche Zeitpunkte i bis iv werden hier durch die Erfassungseinrichtung 3 die jeweiligen Fahrzeuge 5a bis 5d erfasst. Vorliegend wird so beispielsweise eine Geschwindigkeit und ein Spurwechsel beziehungsweise eine Spurwechselfrequenz detektiert. Die Fahrparameter-Werte der entsprechenden Fahrparameter, welche auch zusätzlich noch eine Gierrate oder eine Beschleunigung oder andere Fahrparameter umfassen können, werden von der Recheneinrichtung 7 ermittelt und vorliegend für jedes Fahrzeug 5a bis 5d in einem Zwischenspeicher 9 zwischengespeichert. Von diesen zwischengespeicherten Daten wird nun vorliegend mittels einer statistischen Methode wie beispielsweise dem RANSAC-Algorithmus (Random Sample Consensus Algorithmus) bestimmt, welche der Fahrzeuge 5a bis 5d Ausreißer und damit Abweichler-Fahrzeuge sind und welche der Fahrzeuge sich durch ein globales Verhalten gut beschreiben lassen und somit Durchschnitts-Fahrzeuge sind. Vorliegend wird hier das vierte Fahrzeug 5d aufgrund seiner erhöhten Geschwindigkeit und des häufigen und schnellen Spurwechsels als Ausreißer und somit Abweichler-Fahrzeug 5d kategorisiert werden.

Dabei ist hier wichtig, dass mittels eines Überprüfens eines Anteils der Durchschnitts-Fahrzeuge 5a bis 5c an den zwischengespeicherten erfassten Fahrzeugen 5a bis 5d überprüft wird, um die Aktualität der Daten zu gewährleisten und die statistische Methode oder ein Ergebnis derselben nicht durch alte Daten, welche beispielsweise aus einer vollkommen anderen Fahrsituation stammen, zu verfälschen. Wird festgestellt, dass eine Mehrheit, beispielsweise mehr als 50%, der Fahrzeuge Durchschnitts-Fahrzeuge sind, deren Verhalten in den vergangenen Zeitschritten i bis iv gut als Gesamtheit durch die statistische Methode beschrieben werden konnte, so werden sämtliche erfassten Fahrzeuge im Zwischenspeicher 9 behalten. Sollte im Gegensatz zum gezeigten Beispiel nicht der Fall sein, so können die ältesten abgespeicherten Fahrzeugdaten, also beispielsweise die Fahrparameter-Werte, welche vorliegend in dem Zeitschritt i abgespeichert sind, gelöscht werden und das Kategorisieren nochmals durchgeführt werden. Des Weiteren werden aus dem Zwischenspeicher 9 vorliegend alte Abweichler-Fahrzeuge, welche sich nicht mehr in der Umgebung 6 des Fahrzeugs befinden, also nicht mehr von der Erfassungseinrichtung 3 erfasst werden, gelöscht. Deren Verhalten kann nicht mehr dazu dienen, eine Gefahrensituation zu vermeiden.

An dieser Stelle sind die erfassten Fahrzeuge 5a bis 5d nun in zwei Kategorien oder Klassen unterteilt, nämlich die Durchschnitts-Fahrzeuge 5a bis 5c und die Abweichler-Fahrzeuge, hier nur das eine Fahrzeug 5d.

Die Durchschnitts-Fahrzeuge 5a bis 5d werden nun genutzt, um ein allgemeines Verhalten, ein sogenanntes Gesamtverhalten, des Verkehrs zu ermitteln, hier eine Durchschnittsgeschwindigkeit mit einer entsprechenden Standardabweichung. Aus diesem lässt sich beispielsweise ein künftiges Fahrverhalten des eigenen Kraftfahrzeugs 1, beispielsweise eine Geschwindigkeit, ableiten, wenn es in einem teil- oder vollautonomen Fahrbetrieb ist. Das künftige Fahrverhalten ist vorliegend durch den Pfeil x symbolisiert. Hierfür können selbstverständlich auch noch eine oder mehrere weitere Informationen, beispielsweise eine Information über das Fahrverhalten des Fahrzeugs 5a direkt vor dem Kraftfahrzeug 1, genutzt werden, was an dieser Stelle jedoch nicht weiter erläutert wird. Alternativ kann auch eine entsprechende Warnung oder Empfehlung an den Fahrer des Kraftfahrzeugs 1 ausgegeben werden. Auf das ermittelte Gesamtverhalten der Gesamtheit der erfassten Durchschnitts-Fahrzeuge 5a bis 5c wird sodann ein Filter angewandt, um das Gesamtverhalten in einem künftigen Zeitschritt x vorherzusagen. Dieses ist vorliegend in der Zeichnung durch die Pfeile Ax, Bx, Cx dargestellt.

Die Abweichler-Fahrzeuge, hier das eine Abweichler-Fahrzeug 5d, sind hier die Fahrzeuge, welche in dem letzten Zeitschritt iv erfasst wurden, sich also noch in der Umgebung 6 des Kraftfahrzeugs 1 aufhalten, und nicht zu den Durchschnitts-Fahrzeugen 5a bis 5c gehören. Das bedeutet, dass die Abweichler-Fahrzeuge 5d ein Verhalten oder Verkehrsverhalten aufweisen, welches sich von dem allgemeinen Verkehrsverhalten oder Gesamtverhalten signifikant unterscheidet. Dabei handelt es sich typischerweise um Fahrzeuge, die schneller fahren, überholen oder Spurwechsel durchführen. Für jedes der Abweichler-Fahrzeuge 5d wird nun ein eigener Filter angewandt, beispielsweise ein Kalman-Filter oder ein Alpha-Beta-Filter, um das Fahrverhalten Dx in einem nächsten Zeitschritt x dieses potentiell gefährlichen Fahrzeugs 5d abzuschätzen. Dabei können auch weitere Analysierschritte durchgeführt werden, um das zukünftige Verhalten Dx besser vorherzusagen. Da diese Abweichler-Fahrzeuge 5d in näherer Zukunft eine Gefahr darstellen könnten, sollten durch das Fahrerassistenzsystem 2 diese in besonderer Weise beachtet werden. Verfügt das Fahrerassistenzsystem 2 nicht über genügend Rechenkapazität, um sämtliche Fahrzeuge in der Umgebung 6 des Kraftfahrzeugs 1 zu überwachen, so sollten die Abweichler-Fahrzeuge 5d eine hohe Verarbeitungspriorität besitzen.

Ergänzend kann schließlich das Nachbar-Fahrzeug 5c, vorliegend das dritte Fahrzeug 5c, bestimmt werden. Das Verhalten des jeweiligen Nachbar-Fahrzeugs 5c sollte ebenfalls individuell mit einem entsprechenden Filter vorhergesagt werden, um hier entsprechend das Verhalten des Kraftfahrzeugs 1 in dem teilautonomen oder autonomen Fahrmodus zu bestimmen oder eine entsprechende Warnung auszugeben und so Unfälle zu vermeiden. Das Nachbar-Fahrzeug 5c kann also gemeinsam mit dem Abweichler-Fahrzeug 5d als potentielle Gefahrenquelle behandelt werden und dadurch im Rahmen des beschriebenen Verfahren individuell berücksichtigt werden, um Unfälle zu vermeiden und flüssig und gleichmäßig zu fahren.

Die Durchschnitts-Fahrzeuge 5a bis 5c verhalten sich gemäß dem allgemeinen Gesamtverhalten des Verkehrs und helfen dem Fahrerassistenzsystem 2, einen besseren Überblick über das Gesamtverhalten des Verkehrs zu erhalten. Sie versorgen das System mit grundlegenden durchschnittlichen Daten wie Durchschnittsgeschwindigkeit, Gierrate und dergleichen. Dieses Gesamtverhalten kann genutzt werden, um, beispielsweise in Abhängigkeit eines Vorder-Fahrzeugs, hier des ersten Fahrzeugs 5a, das Verhalten des Kraftfahrzeugs 1 zu bestimmen. So kann sich beispielsweise das eigene Kraftfahrzeug gemäß einer Wichtung an dem Vorder-Fahrzeug 5a und dem Durchschnittsverhalten orientieren, beispielsweise zu 70 Prozent an dem Vorder-Fahrzeug 5a und zu 30 Prozent an dem Gesamtverhalten. Somit wird bei dem Steuern des autonomen Fahrzeugs oder bei dem Ausgeben einer Warnung ein allgemeiner Verkehrsfluss berücksichtigt und zugleich einzelne Gefahrenquellen wie die Abweichler-Fahrzeuge 5d oder die Nachbar-Fahrzeuge 5c berücksichtigt.

## Patentansprüche

1. Verfahren zum Betreiben eines Fahrerassistenzsystems (2) eines Kraftfahrzeugs (1), mit den Verfahrensschritten:
a) Erfassen von mehreren Fahrzeugen (5a-5d) in einer Umgebung (6) des Kraftfahrzeugs (1) durch eine Erfassungseinrichtung (3) des Fahrerassistenzsystems (2);
b) Ermitteln eines jeweiligen Fahrparameter-Wertes für zumindest einen Fahrparameter der erfassten Fahrzeuge (5a-5d) durch eine Recheneinrichtung (7) des Fahrerassistenzsystems (2);
**gekennzeichnet durch**
c) Kategorisieren der erfassten Fahrzeuge (5a-5d) anhand des zumindest einen jeweils für die erfassten Fahrzeuge (5a-5d) ermittelten Fahrparameter-Wertes in Durchschnitts-Fahrzeuge (5a-5c) und in Abweichler-Fahrzeuge (5d);
d) kollektives Vorhersagen eines Gesamt-Verhaltens für eine Gesamtheit der erfassten Durchschnitts-Fahrzeuge (5a-5c) anhand der für die Durchschnitts-Fahrzeuge (5a-5c) ermittelten Fahrparameter-Werte; und
e) individuelles Vorhersagen eines jeweiligen Einzel-Verhaltens für die erfassten Abweichler-Fahrzeuge (5d) anhand des jeweiligen, für das jeweilige Abweichler-Fahrzeug (5d) ermittelten Fahrparameter-Wertes.

2. Verfahren nach Anspruch 1,
**gekennzeichnet durch** ein
Steuern des Kraftfahrzeugs (1) in Abhängigkeit des für die Durchschnitts-Fahrzeuge (5a-5c) und für die Abweichler-Fahrzeuge (5d) vorhergesagten Verhaltens durch das Fahrerassistenzsystem in einem teilautonomen oder vollautonomen Fahrmodus als Verfahrensschritt f).

3. Verfahren nach einem der vorhergehenden Ansprüche,
**dadurch gekennzeichnet, dass**
der zumindest eine Fahrparameter eine Gierrate und/oder eine Geschwindigkeit und/oder eine Beschleunigung und/oder eine Spurwechsel-Häufigkeit und/oder eine Überhol-Häufigkeit des jeweiligen erfassten Fahrzeugs (5a-5d) umfasst.

4. Verfahren nach einem der vorhergehenden Ansprüche,
**dadurch gekennzeichnet, dass**
das Kategorisieren gemäß Verfahrensschritt c) und/oder das kollektive Vorhersagen gemäß Verfahrensschritt d) ein Bilden einer Verteilung und/oder eines Mittelwertes und/oder einer Varianz der jeweiligen Fahrparameter-Werte des zumindest einen Fahrparameters umfasst.

5. Verfahren nach einem der vorhergehenden Ansprüche,
**dadurch gekennzeichnet, dass**
das Kategorisieren gemäß Verfahrensschritt c) unter Verwendung einer Methode der Statistik zum Erkennen von Fehlern und/oder Abweichungen in einer Menge von Datenpunkten erfolgt, insbesondere unter Verwendung des RANSAC-Algorithmus' und/oder eines Maximum-Likelihood-artigen Schätzers und/oder einer Stützvektormaschine.

6. Verfahren nach einem der vorhergehenden Ansprüche,
**dadurch gekennzeichnet, dass**
zumindest die Verfahrensschritte a) bis c), insbesondere die Verfahrensschritte a) bis e), iterativ durchgeführt werden und dabei die erfassten Fahrzeuge (5a-5d) mit den zugehörigen ermittelten Fahrparameter-Werten in einem Zwischenspeicher (9) zwischengespeichert werden, insbesondere mit einem Zeitstempel versehen werden, und die Verfahrensschritte c) bis e) basierend auf den zwischengespeicherten erfassten Fahrzeugen (5a-5d) mit den zwischengespeicherten ermittelten Fahrparameter-Werten durchgeführt werden.

7. Verfahren nach Anspruch 6,
**dadurch gekennzeichnet, dass**
ein Anteil der Durchschnitts-Fahrzeuge (5a-5c) an den zwischengespeicherten erfassten Fahrzeugen (5a-5d) überprüft wird, und, falls der Anteil geringer ist als ein vorgegebener Grenzwert, insbesondere geringer als 50%, zumindest das eine Durchschnitts-Fahrzeug mit dem ältesten Zeitstempel sowie der zumindest eine zugehörige Fahrparameter-Wert aus dem Zwischenspeicher (9) gelöscht wird und sodann das Kategorisieren gemäß Verfahrensschritt c) erneut durchgeführt wird.

8. Verfahren nach Anspruch 6 oder 7,
**dadurch gekennzeichnet, dass**
Abweichler-Fahrzeuge (5d), welche in einer Iterationsstufe nicht mehr erfasst werden, aus dem Zwischenspeicher (9) gelöscht werden.

9. Verfahren nach einem der vorhergehenden Ansprüche,
**dadurch gekennzeichnet, dass**
das kollektive Vorhersagen gemäß Verfahrensschritt d) und/oder das individuelle Vorhersagen gemäß Verfahrensschritt e) unter Verwendung eines VorhersageFilters erfolgt, insbesondere eines Kalman-Filters und/oder eines Alpha-Beta-Filters.

10. Verfahren nach einem der vorhergehenden Ansprüche,
**dadurch gekennzeichnet, dass**
das Einzel-Verhalten des zumindest einen erfassten Fahrzeugs (5c) mit dem geringsten Abstand zu dem Kraftfahrzeug individuell vorhergesagt wird.

11. Verfahren nach Anspruch 10,
**dadurch gekennzeichnet, dass**
ein Fahrparameter des Kraftfahrzeugs (1), insbesondere eine Gierrate und/oder eine Geschwindigkeit und/oder eine Beschleunigung und/oder ein Abstand zu einem der Fahrzeuge (5a-5d) und/oder einem Objekt in der Umgebung (6) des Kraftfahrzeugs (1), anteilig an das vorhergesagte Gesamt-Verhalten und an das für das erfasste Fahrzeug (5c) mit dem geringsten Abstand vorhergesagte Einzel-Verhalten angepasst wird.

12. Verfahren nach einem der vorhergehenden Ansprüche,
**dadurch gekennzeichnet, dass**
bei dem kollektiven Vorhersagen gemäß Verfahrensschritt d) das Gesamt-Verhalten anhand eines Gesamt-Fahrparameter-Wertes für den jeweiligen zumindest einen Fahrparameter charakterisiert wird, welcher aus den ermittelten Fahrparameter-Werten erzeugt wird.

13. Verfahren nach einem der vorhergehenden Ansprüche,
**dadurch gekennzeichnet, dass**
die erfassten Abweichler-Fahrzeuge (5d) nach einem vorgegeben Kriterium, welches insbesondere einen Abstand zu dem Kraftfahrzeug (1) und/oder einen oder mehrere der Fahrparameter umfasst, im Hinblick auf ihr Gefahrpotenzial priorisiert werden und nur für eine vorgegebene Anzahl der erfassten Abweichler-Fahrzeuge (5d) das Einzelverhalten individuell vorhergesagt wird.

14. Fahrerassistenzsystem (2) für ein Kraftfahrzeug (1), mit
- einer Erfassungseinrichtung (3) zum Erfassen von Fahrzeugen (5a-5d) in einer Umgebung (6) des Kraftfahrzeugs (1); und
- einer Recheneinrichtung (7) zum Ermitteln eines jeweiligen Fahrparameter-Wertes für zumindest einen Fahrparameter der erfassten Fahrzeuge (5a-5d);
**dadurch gekennzeichnet, dass**
die Recheneinrichtung (7) ausgebildet ist, die erfassten Fahrzeuge (5a-5d) anhand des zumindest einen jeweils für die erfassten Fahrzeuge (5a-5d) ermittelten Fahrparameter-Wertes in Durchschnitts-Fahrzeuge (5a-5c) und in Abweichler-Fahrzeuge (5d) zu kategorisieren, sowie ein Gesamt-Verhalten für eine Gesamtheit der erfassten Durchschnitts-Fahrzeuge (5a-5c) anhand der für die Durchschnitts-Fahrzeuge (5a-5c) ermittelten Fahrparameter-Werte kollektiv vorherzusagen und ein jeweiliges Einzel-Verhalten für die erfassten Abweichler-Fahrzeuge (5d) anhand des jeweiligen, für das jeweilige Abweichler-Fahrzeug (5d) ermittelten Fahrparameter-Wertes individuell vorherzusagen.

15. Kraftfahrzeug (1) mit einem Fahrerassistenzsystem (2) nach Anspruch 14.

## Claims

1. Method for operating a driver assistance system (2) of a motor vehicle (1), comprising the method steps:
a) sensing a plurality of vehicles (5a-5d) in the surroundings (6) of the motor vehicle (1) by means of a sensing device (3) of the driver assistance system (2);
b) determining a respective driving parameter value for at least one driving parameter of the sensed vehicles (5a-5d) by means of a computing device (7) of the driver assistance system (2);
**characterized by**
c) categorizing the sensed vehicles (5a-5d) on the basis of the at least one driving parameter value, respectively determined for the sensed vehicles (5a-5d), into average vehicles (5a-5c) and into atypical vehicles (5d);
d) collectively predicting an overall behaviour for a totality of the sensed average vehicles (5a-5c) on the basis of the driving parameter values determined for the average vehicles (5a-5c); and
e) individually predicting a respective individual behaviour for the sensed atypical vehicles (5d) on the basis of the respective driving parameter value determined for the respective atypical vehicle (5d) .

2. Method according to Claim 1,
**characterized by**
controlling of the motor vehicle (1) as a function of the behaviour predicted for the average vehicles (5a-5c) and for the atypical vehicles (5d) by means of the driver assistance system in a partially autonomous or fully autonomous driving mode as method step f).

3. Method according to one of the preceding claims,
**characterized in that**
the at least one driving parameter comprises a yaw rate and/or a speed and/or an acceleration and/or a lane change frequency and/or an overtaking frequency of the respective sensed vehicle (5a-5d).

4. Method according to one of the preceding claims,
**characterized in that**
the categorization according to method step c) and/or the collective prediction according to method step d) comprises forming a distribution and/or a mean value and/or a variance of the respective driving parameter values of the at least one driving parameter.

5. Method according to one of the preceding claims,
**characterized in that**
the categorization according to method step c) is carried out using a statistical method for detecting errors and/or deviations in a set of data points, in particular using the RANSAC algorithm and/or a maximum likelihood-like estimator and/or a support vector machine.

6. Method according to one of the preceding claims,
**characterized in that**
at least the method steps a) to c), in particular the method steps a) to e), are carried out iteratively and in the process the sensed vehicles (5a-5d) are buffered with the associated determined driving parameter values in a buffer (9), in particular are provided with a time stamp, and the method steps c) to e) are carried out on the basis of the buffered sensed vehicles (5a-5d) with the buffered determined driving parameter values.

7. Method according to Claim 6,
**characterized in that**
a proportion of average vehicles (5a-5c) in the buffered sensed vehicles (5a-5d) is checked, and if the proportion is lower than a predefined limiting value, in particular lower than 50%, at least the one average vehicle with the oldest time stamp and the at least one associated driving parameter value are deleted from the buffer (9) and the categorization is then carried out anew according to method step c).

8. Method according to Claim 6 or 7,
**characterized in that**
atypical vehicles (5d) which are no longer sensed in an iteration step are deleted from the buffer (9) .

9. Method according to one of the preceding claims,
**characterized in that**
the collective prediction according to method step d) and/or the individual prediction according to method step e) are carried out using a prediction filter, in particular a Kalman filter and/or an alpha-beta filter.

10. Method according to one of the preceding claims,
**characterized in that**
the individual behaviour of the at least one sensed vehicle (5c) with the shortest distance from the motor vehicle is predicted individually.

11. Method according to Claim 10,
**characterized in that**
a driving parameter of the motor vehicle (1), in particular a yaw rate and/or a speed and/or an acceleration and/or a distance from one of the vehicles (5a-5d) and/or an object in the surroundings (6) of the motor vehicle (1) are/is adapted proportionally to the predicted overall behaviour and to the individual behaviour which is predicted for the sensed vehicle (5c) with the shortest distance.

12. Method according to one of the preceding claims,
**characterized in that**
during the collective prediction according to method step d) the overall behaviour is characterized on the basis of an overall driving parameter value for the respective at least one driving parameter which is generated from the determined driving parameter values.

13. Method according to one of the preceding claims,
**characterized in that**
the sensed atypical vehicles (5d) are prioritized with respect to their danger potential according to a predefined criterion which comprises, in particular, a distance from the motor vehicle (1) and/or one or more of the driving parameters, and the individual behaviour is predicted individually only for a predefined number of the sensed atypical vehicles (5d).

14. Driver assistance system (2) for a motor vehicle (1), having
- a sensing device (3) for sensing vehicles (5a-5d) in the surroundings (6) of the motor vehicle (1); and
- a computing device (7) for determining a respective driving parameter value for at least one driving parameter of the sensed vehicles (5a-5d);
**characterized in that**
the computing device (7) is designed to categorize the sensed vehicles (5a-5d) on the basis of the at least one driving parameter value, respectively determined for the sensed vehicles (5a-5d), into average vehicles (5a-5c) and into atypical vehicles (5d), and to predict collectively an overall behaviour for a totality of the sensed average vehicles (5a-5c) on the basis of the driving parameter values determined for the average vehicles (5a-5c), and to predict individually a respective individual behaviour for the sensed atypical vehicles (5d) on the basis of the respective driving parameter value determined for the respective atypical vehicle (5d).

15. Motor vehicle (1) having a driver assistance system (2) according to Claim 14.

## Revendications

1. Procédé d'exploitation d'un système d'assistance au conducteur (2) d'un véhicule automobile (1), comprenant les étapes de procédé consistant à :
a) détecter plusieurs véhicules (5a à 5d) dans un environnement (6) du véhicule automobile (1) par un dispositif de détection (3) du système d'assistance au conducteur (2) ;
b) déterminer une valeur de paramètre de conduite respective pour au moins un paramètre de conduite des véhicules (5a à 5d) détectés par un dispositif de calcul (7) du système d'assistance au conducteur (2) ;
**caractérisé par** les étapes consistant à
c) catégoriser les véhicules (5a à 5d) détectés à l'aide de ladite au moins une valeur de paramètre de conduite déterminée respectivement pour les véhicules (5a à 5d) détectés en véhicules moyens (5a à 5c) et en véhicules divergents (5d) ;
d) prédire de manière collective un comportement global pour la totalité des véhicules moyens détectés (5a à 5c) à l'aide des valeurs de paramètre de conduite déterminées pour les véhicules moyens (5a à 5c) ; et
e) prédire de manière individuelle un comportement individuel respectif pour les véhicules divergents détectés (5d) à l'aide de la valeur de paramètre de conduite respective, déterminée pour le véhicule divergent (5d) respectif.

2. Procédé selon la revendication 1, **caractérisé par** la commande du véhicule automobile (1) en fonction du comportement prédit pour les véhicules moyens (5a à 5c) et pour les véhicules divergents (5d) par le système d'assistance au conducteur dans un mode de conduite partiellement ou entièrement autonome à l'étape de procédé f).

3. Procédé selon l'une quelconque des revendications précédentes, **caractérisé en ce que** ledit au moins un paramètre de conduite comprend un taux de lacet et/ou une vitesse et/ou une accélération et/ou une fréquence de changement de voie et/ou une fréquence de dépassement du véhicule (5a à 5d) détecté respectif.

4. Procédé selon l'une quelconque des revendications précédentes, **caractérisé en ce que** la catégorisation selon l'étape de procédé c) et/ou la prédiction collective selon l'étape de procédé d) comprennent la formation d'une distribution et/ou d'une moyenne et/ou d'une variance des valeurs de paramètre de conduite respectives dudit au moins un paramètre de conduite.

5. Procédé selon l'une quelconque des revendications précédentes, **caractérisé en ce que** la catégorisation selon l'étape de procédé c) est effectuée en utilisant un procédé statistique pour reconnaître des erreurs et/ou des écarts dans un ensemble de points de données, en particulier en utilisant l'algorithme RANSAC et/ou un estimateur de type à maximum de vraisemblance et/ou une machine à vecteurs de support.

6. Procédé selon l'une quelconque des revendications précédentes, **caractérisé en ce qu'**au moins les étapes de procédé a) à c), en particulier les étapes de procédé a) à e), sont exécutées de manière itérative et les véhicules (5a à 5d) détectés à cette occasion avec les valeurs de paramètre de conduite déterminées associées sont enregistrés provisoirement dans une mémoire tampon (9), en particulier horodatés, et les étapes de procédé c) à e) sont exécutées sur la base des véhicules (5a à 5d) détectés enregistrés provisoirement avec les valeurs de paramètre de conduite déterminées enregistrées provisoirement.

7. Procédé selon la revendication 6, **caractérisé en ce qu'**une proportion des véhicules moyens (5a à 5c) sur les véhicules (5a à 5d) détectés enregistrés provisoirement est vérifiée, et si la proportion est inférieure à une valeur seuil prédéfinie, en particulier inférieure à 50 %, au moins ledit un véhicule moyen ayant l'horodatage le plus ancien ainsi que ladite au moins une valeur de paramètre de conduite la plus ancienne sont supprimés de la mémoire tampon (9) et ensuite la catégorisation est ré-exécutée selon l'étape de procédé c).

8. Procédé selon la revendication 6 ou 7, **caractérisé en ce que** des véhicules divergents (5d) qui ne sont plus détectés dans une phase d'itération sont supprimés de la mémoire tampon (9).

9. Procédé selon l'une quelconque des revendications précédentes, **caractérisé en ce que** la prédiction collective selon l'étape de procédé d) et/ou la prédiction individuelle selon l'étape de procédé e) sont effectuées en utilisant un filtre de prédiction, en particulier un filtre de Kalman et/ou un filtre alpha-bêta.

10. Procédé selon l'une quelconque des revendications précédentes, **caractérisé en ce que** le comportement individuel dudit au moins un véhicule détecté (5c) est prédit individuellement avec la plus petite distance par rapport au véhicule automobile.

11. Procédé selon la revendication 10, **caractérisé en ce qu'**un paramètre de conduite du véhicule automobile (1), en particulier un taux de lacet et/ou une vitesse et/ou une accélération et/ou une distance par rapport à l'un des véhicules (5a à 5d) et/ou à un objet dans l'environnement (6) du véhicule automobile (1), est adapté proportionnellement au comportement global prédit et au comportement individuel prédit pour le véhicule détecté (5c) ayant la plus petite distance.

12. Procédé selon l'une quelconque des revendications précédentes, **caractérisé en ce que** lors de la prédiction collective selon l'étape de procédé d), le comportement global est caractérisé à l'aide d'une valeur de paramètre de conduite globale pour ledit au moins un paramètre de conduite, qui est générée à partir des valeurs de paramètre de conduite déterminées.

13. Procédé selon l'une quelconque des revendications précédentes, **caractérisé en ce que** les véhicules divergents (5d) détectés sont priorisés selon un critère prédéfini qui comprend en particulier une distance par rapport au véhicule automobile (1) et/ou un ou plusieurs des paramètres de conduite, en ce qui concerne leur potentiel de risque, et le comportement individuel n'est prédit individuellement que pour un nombre prédéfini des véhicules divergents (5d) détectés.

14. Système d'assistance au conducteur (2) pour un véhicule automobile (1), comprenant
- un dispositif de détection (3) pour détecter des véhicules (5a à 5d) dans un environnement (6) du véhicule automobile (1) ; et
- un dispositif de calcul (7) pour déterminer une valeur de paramètre de conduite respective pour au moins un paramètre de conduite des véhicules (5a à 5d) détectés ;
**caractérisé en ce que** le dispositif de calcul (7) est réalisé pour catégoriser les véhicules (5a à 5d) détectés à l'aide de ladite au moins une valeur de paramètre de conduite déterminée respectivement pour les véhicules détectés (5a à 5d) en véhicules moyens (5a à 5c) et en véhicules divergents (5d), ainsi que pour prédire un comportement global pour la totalité des véhicules moyens détectés (5a à 5c) à l'aide des valeurs de paramètre de conduite déterminées pour les véhicules moyens (5a à 5c), et pour prédire individuellement un comportement individuel respectif pour les véhicules divergents détectés (5d) à l'aide de la valeur de paramètre de conduite déterminée pour le véhicule divergent (5d) respectif.

15. Véhicule automobile (1), comprenant un système d'assistance au conducteur (2) selon la revendication 14.
